# EUROPEAN PATENT SPECIFICATION

(11) **EP 2 533 465 B1**
(45) Date of publication and mention of the grant of the patent: **27.01.2016**
(21) Application number: 10849291.9
(22) Date of filing: 26.08.2010
(51) Int. Cl.: H04L 12/28, H04W 48/18

(54) **METHOD AND TERMINAL FOR ACCESS CONTROL OF NETWORK SERVICE**
VERFAHREN UND ENDGERÄT FÜR ZUGANGSSTEUERUNG EINES NETZWERKDIENSTES
PROCÉDÉ ET TERMINAL POUR UN CONTRÔLE D'ACCÈS DE SERVICE RÉSEAU

(30) Priority: 06.04.2010 CN 201010142010
(43) Date of publication of application: 12.12.2012
(73) Proprietor: ZTE Corporation, Shenzhen City, Guangdong Province 518057 (CN)
(72) Inventor: SHI, Yuanqing, Shenzhen City, Guangdong Province 518057 (CN)
(74) Representative: Zerbi, Guido Maria
(86) International application number: PCT/CN2010/076394
(87) International publication number: WO 2011/124055

(56) References cited:
- EP-A1- 2 071 775
- EP-A1- 2 134 126
- WO-A2-2006/136646
- CN-A- 101 352 064
- CN-A- 101 645 814
- US-A1- 2008 137 630
- US-A1- 2008 192 681
- US-A1- 2009 245 150

## Description

### Technical Field

The present invention relates to the field of mobile communications, and in particular, to a method and terminal for access control of a network service.

### Background of the Related Art

With the recent evolution and successful expansion of the worldwide Wireless Local Area Networks (WLANs), requirements of converging the WLANs and 3G mobile networks, such as Global System for Mobile Communications (GSM)/General Packet Radio Service (GPRS), Universal Mobile Telecommunications System (UMTS), Code Division Multiple Access (CDMA) 2000 etc., are generated. The main purpose of this convergence is to develop a new mobile data network, so that ubiquitous data services at a very high data rate can be supported at hot spots, while reducing the pressure of the data traffic on 3G mobile networks brought about by a large number of data services. At present, three domestic telecommunication operators have developed their own WLANs, and in the context of the convergence of the fixed network and the mobile network becoming a development trend of the global telecommunication industry, the development of the convergence of the WLAN and other mobile networks to support and develop new types of mobile data services is an inevitable choice. The terminal not only needs to have a variety of wireless access capabilities, but also needs to consider how to control access to the network by mobile phone applications in the case of multiple accesses, so that users normally using various types of mobile internet applications and mobile services deployed by mobile operators are ensured in various complex network environments, to meet the individual requirements of different users.

When Wireless Local Area Networks (WLAN)/3G or WLAN/2G mobile phones in the existing market access networks at the same time using dual radio accesses, only one network access is available, and in this case, if the mobile packet domain access is available, access to the applications on the Internet is controlled by mobile operators, some services on the Internet are likely impossible to use, and the access will be prevented by the mobile operators, for example, the China mobile can shield skype, and if the WLAN access is available, the services, such as Multimedia Message Services (MMSs), of China mobile can not be used. US2008192681A1 discloses examples of prior art methods and systems for access control of a network service.

### Summary of the Invention

The problem to be solved by the present invention is to provide a method and terminal for access control of a network service, to support a network service of accessing multiple networks simultaneously.

In order to solve the above technical problem, a method for access control of a network service is provided, which is implemented based on a terminal with a capability of accessing WLAN and capability of accessing a mobile network, comprising:
a route establishing step, in which the terminal obtains a local IP address allocated by a WLAN and a remote IP address allocated by a core network packet domain device, and establishes Internet service route options corresponding to the local IP address and packet domain service route options corresponding to the remote IP address;
a route matching step, in which the terminal matches the service route options according to a destination address of an original service message; and
a message encapsulating and transmitting step, in which the terminal encapsulates the original service message according to the matched service route options and transmits the encapsulated service data message.

In the route establishing step, the terminal obtains the local IP address by accessing the wireless local area network and establishing a wireless local area network link , and obtains the remote IP address by accessing the mobile network and establishing a packet area link;
in the message encapsulating and transmitting step, a source address of the encapsulated Internet service data message is the local IP address, and a source address of the encapsulated packet domain service data message is the remote IP address.

In the message encapsulating and transmitting step, the terminal receives and transmits the Internet service data message through a wireless link interface, and receives and transmits the packet domain service data message through a functional interface of a wireless protocol stack user plane..

In the route establishing step, the terminal obtains the local IP address by accessing the wireless local area network and establishing a wireless local area network link, and establishes a security tunnel by using the link where the local IP address is located to obtain the remote IP address, and establishes tunnel route options corresponding to the local IP address while establishing packet domain service route options corresponding to the remote IP address;
the message encapsulating and transmitting step further comprises: a source address of the encapsulated Internet service data message being the local IP address, an inner source address of the packet domain service data message on which the secondary encapsulation is performed according to the packet domain service route options and the tunnel route options being the remote IP address, and an outer source address being the local IP address.

In the message encapsulating and transmitting step, the terminal receives and transmits the Internet service data message and the packet domain service data message through the wireless link interface, and the packet domain service data message corresponds to a port at the terminal side of the security tunnel.

In the route establishing step, the terminal is triggered to obtain the local IP address or the remote IP address when the network service is enabled, or the terminal actively obtains the local IP address or the remote IP address before the network service is enabled.

The method further comprises: the terminal performing the route establishing step according to service configuration information which is preset in the terminal or dynamically downloaded to the terminal, wherein, the service configuration information comprises link information associated with the service and route configuration information;
the route establishing step further comprises: when the service is enabled, the terminal determining whether to initiate a packet domain link dialing process or a WLAN link establishing process according to the link information associated with the service, until obtaining the local IP address or the remote IP address; and the terminal establishing corresponding service route options according to the route configuration information and the obtained local IP address or the remote IP address.

The Internet service route options or the packet domain service route options are represented by means of default.

The service configuration information further comprises security strategy information, and when the packet domain service which needs the security tunnel is enabled, the route establishing step further comprises: the terminal generating strategy items of the security tunnel according to the security strategy information, establishing the security tunnel using the link where the local IP is located, and establishing tunnel route options corresponding to the local IP address;
in the route matching step, the terminal matches the tunnel route options and the packet domain service route options according to the security strategy information;
the message encapsulating and transmitting step further comprises: the terminal performing a secondary encapsulation according to the packet domain service route options and the tunnel route options, wherein, the inner source address of the packet domain service data message on which the secondary encapsulation is performed is the remote IP address, and the outer source address is the local IP address.

The Internet service route options and the tunnel route options are represented by means of default, or the packet domain service route options are represented by means of default.

In order to solve the above technical problem, a terminal with capability of accessing a WLAN and capability of accessing a mobile network is also provided, comprising: an application unit, a route control unit, a message processing unit and a message receiving/transmitting unit, wherein,
the application unit is configured to manage service configuration information of a packet domain service and an Internet service, and generate and process an original service message;
the route establishing unit is connected to the application unit, and is configured to obtain a local Internet Protocol (IP) address allocated by a WLAN and a remote IP address allocated by a core network packet domain device according to the service configuration information of the application unit, and establish Internet service route options corresponding to the local IP address and packet domain service route options corresponding to the remote IP address;
the message processing unit is connected to the application unit and the route establishing unit, and is configured to match the service route options which are established by the route establishing unit according to a destination address of an original service message, and encapsulate the original service message into a service data message according to the matched service route options and de-encapsulate the service data message which is received by the message receiving/transmitting unit into the original service message; and
the message receiving/transmitting unit is connected to the message processing unit, and is configured to receive the service data message with a destination address being the local IP address or the remote IP address which is transmitted by the network side, and transmit the service data message with the source address being the local IP address or the remote IP address which is encapsulated and processed by the message processing unit to the network side
the application unit comprises a number of mobile Internet service modules, a number of mobile packet domain service modules and an application controller module, and the route establishing unit comprises an IP address obtaining module and a route control module, wherein,
the mobile Internet service modules are configured to operate a mobile Internet service and generate and process the original service message;
the mobile packet domain service modules are configured to operate the mobile packet domain service, and generate and process the original service message;
the application controller module is configured to manage the services in the mobile Internet service module and the mobile packet domain service module, and record corresponding service configuration information, transmit the corresponding service configuration information to the route establishing unit when the service is enabled, wherein, the service configuration information comprises link information associated with the service and route configuration information;
the IP address obtaining module is configured to determine whether to initiate a packet domain link dialing process or a WLAN link establishing process according to the link information associated with the service, until obtaining the local IP address or the remote IP address; and
the route control module is configured to establish corresponding service route options according to the route configuration information and the local IP address or the remote IP address which is newly obtained by the IP address obtaining module or an existing local IP address or remote IP address.

The IP address obtaining module is configured to obtain the local IP address by establishing a WLAN link and depending on a local static IP setting or DHCP; and obtain the remote IP address by establishing a packet domain link.

The IP address obtaining module is configured to obtain the local IP address by establishing a wireless local area network link and depending on the local static IP setting or DHCP; and obtain the remote IP address by establishing a security tunnel using a link where the local IP is located;
the route establishing unit further comprises a security tunnel establishing module, wherein, the route configuration information further comprises security tunnel information corresponding to the security tunnel, and the security tunnel information comprises security strategy information and an IP address or a domain name of a tunnel port device at the network side;
the application controller module is further configured to when the packet domain service which needs the security tunnel is enabled, generate strategy items of the security tunnel according to the security strategy information, transmit the strategy items of the security tunnel and the IP address or domain name of the tunnel port device at the network side to the security tunnel establishing module to trigger the security tunnel establishing module to establish the security tunnel;
the security tunnel establishing module is configured to establish the security tunnel using the link where the local IP address is located according to the triggering of the application controller module, and notify the IP address obtaining module; and
the IP address obtaining module is configured to obtain the remote IP address using the established security tunnel.

The message processing unit comprises a Transfer Control Protocol/Internet Protocol (TCP/IP) module, which is configured to receive the original service message transmitted by the mobile Internet service module or the mobile packet domain service module, and match the service route options according to the destination address of the original service message and encapsulate the original service message into a service data message; after receiving and then de-encapsulating the service data message received by the message receiving/transmitting unit, transmit the de-encapsulated service data message to the corresponding mobile Internet service module or the mobile packet domain service module.

The message receiving/transmitting unit comprises a wireless link interface and a functional interface of a wireless protocol stack user plane, wherein, the wireless link interface is configured to receive and transmit the mobile Internet network service data message; and the functional interface of the wireless protocol stack user plane is configured to receive and transmit mobile packet domain service data message.

The message processing unit further comprises a data security module connected to the TCP/IP module, the TCP/IP module is further configured to make the source address and the destination address of the encapsulated original service message of the packet domain service be a remote IP address and an IP address of the packet domain service server respectively, and transmit the encapsulated data message to the data security module when it is determined that there is a need to transmit through the security tunnel;
the data security module is configured to perform tunnel data encapsulation on the encapsulated message again, and transmit the service data message, on which the tunnel encapsulation is performed and then the destination address of which is an IP address of the tunnel port device at the network side, to the TCP/IP module again;
the TCP/IP module is further configured to match the route options according to the destination address of the service data message on which the tunnel encapsulation is performed and perform a secondary encapsulation, wherein, after the secondary encapsulation, the source address of the service data message is the local IP address; and
the message receiving/transmitting unit is further configured to transmit the packet domain service data message on which the secondary encapsulation is performed through the wireless link interface and the established security tunnel.

The service configuration information further comprises an encrypted member of service data streams,
the application controller module is further configured to deliver the encrypted member of the service data streams to the data security module; and
the data security module is further configured to perform encryption and verification according to the encrypted member.

In order to solve the above technical problem, a method for access control of a network service is also provided, which is implemented based on a terminal with capabilities of accessing multiple networks, comprising:
the terminal obtaining IP addresses allocated by various networks, and establishing service route options of the various networks corresponding to the various IP addresses according to a local route strategy; and
when the terminal accesses the network service, matching the corresponding service route options according to the destination address of an original service message and encapsulating and transmitting a service data message according to the matched service route options.
the terminal obtains the IP addresses allocated by the networks to which the terminal belongs when the network service is enabled, or actively obtains the IP addresses allocated by the networks to which the terminal belongs before the network service is enabled.

The present invention describes a method for access control of a mobile service on a Fix-Mobile Convergence (FMC) terminal. Such mobile terminal can not only access a WLAN (WLAN), but also can access mobile networks such as CDMA 1x, CDMA evdo, GSM/GPRS, UMTS, TDS-CDMA etc. With the method described in the present invention, different applications on the terminal can simultaneously use different wireless access networks and use mobile application services in the network based on configuration requirements.

The features of the method and apparatus according to the present invention are defined in the independent claims, and the preferable features according to the present invention are defined in the dependent claims.

### Brief Description of Drawings

FIG. 1 is a modular structure diagram of a terminal according to the present invention.
FIG. 2 is a diagram of a fixed-mobile convergence network.
FIG. 3 is a flowchart of a method for access control of a network service according to the present invention.
FIG. 4 is a flowchart of embodiment one of a method for access control of a network service according to the present invention.
FIG. 5 is a flowchart of embodiment two of a method for access control of a network service according to the present invention.

### Preferred Embodiments of the Present Invention

The main idea of the method and terminal for control access of a network service according to the present invention is in that a terminal with capabilities of accessing at least two networks obtains IP addresses allocated by various networks, and establishes service route options corresponding to the various IP addresses. When the terminal accesses the network service, the corresponding service route options are matched according to a destination address of an original service message and a service data message is encapsulated and transmitted according to the matched service route options. In the present invention, different service route options are established for different network services, and this enables the terminal with capabilities of accessing multiple networks to access network services of the multiple networks while the influence of various network services to each other is avoided, thus enhancing the user experience and meeting the individual requirements.

The terminal described in the present invention has capabilities of accessing two or more networks, and the described networks can be two or more of a Wireless Local Area Network (WLAN), CDMA 1x, CDMA evdo, GSM/GPRS, UMTS, TDS-CDMA, WCDMA, and the terminal with capabilities of accessing more than two networks is briefly referred to as a multi-network terminal in the present invention.

At present, most of the terminals with capabilities of accessing multiple networks are terminals with capabilities of accessing the WLAN and a certain mobile network (CDMA 1x, CDMA evdo, GSM/GPRS, UMTS, TDS-CDMA or WCDMA, a mobile network for short hereinafter) access capability, and the method and terminal according to the present invention will be primarily described in detail by example of such a terminal hereinafter.

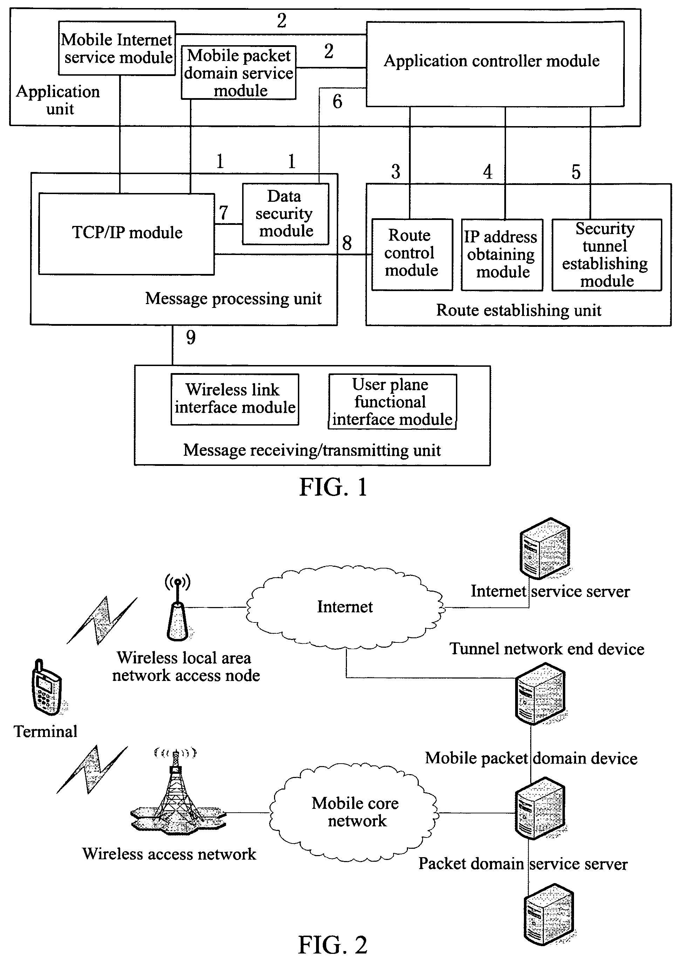

The technical schemes according to the present invention will be further described in detail in conjunction with accompanying drawings hereinafter. FIG. 1 is a diagram of a terminal in the present invention. Implementation modes on different operating systems of the terminal are different, the divisions of various units or modules in the terminal can also be different, but the principle is approximately similar.

As shown in FIG. 1, a terminal with capability of accessing a WLAN and capability of accessing a mobile network comprises an application unit, a route establishing unit, a message processing unit and a message receiving/transmitting unit, wherein,
the application unit is configured to manage service configuration information of a packet domain service and an Internet service, and generate and process an original service message;
the route establishing unit is connected to the application unit, and is configured to obtain an IP address allocated by a WLAN (referred to as a local IP address herein) and an IP address allocated by a core network packet domain device (referred to as a remote IP address herein) according to the service configuration information of the application unit, and establish Internet service route options corresponding to the local IP address and packet domain service route options corresponding to the remote IP address;
the message processing unit is connected to the application unit and the route establishing unit, and is configured to match the service route which is established by the route establishing unit according to a destination address of an original service message, and encapsulate the original service message into a service data message according to the matched service route and is further configured to de-encapsulate the service data message which is received by the message receiving/transmitting unit into the original service message.

Generally speaking, the service data of the original service message comprises two parts of contents, i.e., a control plane message and a media plane of a service. In particular, for different applications (services), the specific encapsulating methods of the original service message thereof are different with each other, for example, for the application of video phones, it needs a control signaling to establish a session, and a message of the control signaling is a Session Initiation Protocol (SIP) message, which is established over a Transfer Control Protocol (TCP) or a User Datagram Protocol (UDP) layer and is encapsulated by the TCP or the UDP. Video or audio data are media data encapsulated and encoded by a Real-time Transport Protocol (RTP), and the RTP is also established over the UDP layer and needs to be encapsulated by the UDP. For another example, surfing the Internet is through the HyperText Transfer Protocol (HTTP) without a control plane or a media plane therein, that is, the HTTP has web data in HyperText Mark-up Language (HTML), in which there is information such as a picture, text etc., and which is encapsulated by the TCP. As the present invention does not concern the specific service type or the encapsulating format, they are collectively referred to as encapsulating the original service message.

The message receiving/transmitting unit is connected to the message processing unit, and is configured to receive the service data message with a destination address being the local IP address or the remote IP address which is transmitted by the network side, and transmit the service data message with the source address being the local IP address or the remote IP address which is encapsulated and processed by the message processing unit to the network side.

The various functional units will be further described hereinafter, as shown in FIG. 1:
the application unit comprises one or more mobile Internet service modules, one or more mobile packet domain service modules and an application controller module, and the route establishing unit comprises an IP address obtaining module and a route control module, wherein,
the mobile Internet service module and the mobile packet domain service module are configured to implement particular mobile Internet service and mobile packet domain service respectively, and generate and process an original service message.

In the present invention, the terminal with capability of accessing a WLAN and capability of accessing a mobile network comprises at least one mobile Internet service module and at least one mobile packet domain service module, as shown in FIG. 1.

The mobile Internet service refers to those application functions which can be accessed by accessing international Internet through a WLAN link, such as QQ, Skype, MSN etc.

The mobile packet domain service refers to those applications which can be deployed and controlled by the mobile operators and can be accessed by the terminal via a mobile packet domain link through a packet domain gateway device, such as MMS, DCD of China Mobile or mobile phone newspaper of Unicom etc. The mobile Internet service can be downloaded to the terminal through the network, or can be transmitted to a terminal such as a mobile phone etc. through a data channel such as the USB or the Bluetooth etc by a personal computer (PC). Some operating systems of the mobile phone support installing such download software to the mobile phone, while some operating systems of the mobile phone do not support dynamical downloading and installing, and are preset in the version of the mobile phone when leaving the factory; and the mobile packet service is generally costumed by the operators, and the mobile phones have possessed such service application functions when leaving the factory.

The application controller module is configured to manage services in the Internet service module and the packet domain service module, and record the corresponding service configuration information, and transmit the corresponding service configuration information to the route establishing unit when the services are enabled.

The application controller monitors the enabling and disabling of the packet domain service and the Internet service on the terminal, and manages the service configuration information of these services.

When the packet domain service is preset in the terminal, there will be service configuration information matched with the packet domain service, and if the service configuration information is dynamically downloaded to and installed on the terminal, there will be service configuration information which is downloaded along with the application software, and these service configuration information is managed by the application controller. All the mobile packet services are controlled by the mobile network operators, and the above-described service configuration information can dynamically issue the configuration information through a certain network server, such as using an OMA DM specification, without excluding implementation by using other similar mechanisms.

The service configuration information comprises link information associated with the service and route configuration information, wherein,
the link information associated with the service, for example, QQ is designated as using a WLAN link while the MMS is designated as using a packet domain link, when the service is enabled, after monitoring the enabling event, the application controller module will notify the IP address obtaining module to determine whether to initiate a packet domain link dialing process or initiate a WLAN link establishing process according to the current link state, until obtaining the local or remote IP address.

The route configuration information refers to information related to the establishment of the specific service route options, for example, an IP address or a port number of a service server at the network side, a domain name of a service server at the network side, etc.

The IP address obtaining module is configured to determine whether to initiate a packet domain link dialing process or a WLAN link establishing process according to the link information associated with the service, until obtaining a local IP address or a remote IP address.

There are two modes of obtaining the local IP address and the remote IP address as follows:
mode one: the IP address obtaining module obtains the local IP address by establishing a WLAN link and depending on a local static IP setting or a DHCP; and obtains the remote IP address by establishing a packet domain link.

To obtain the IP on the wireless network link, the IP address obtaining module needs to complete the process of establishing the WLAN link, and depends on the local static IP setting or depends on the implementation of a Dynamic Host Configuration Protocol (DHCP), and then completes the obtaining of the local IP address. To complete obtaining the IP on the packet domain link, the IP address obtaining module needs to complete the process of establishing the packet domain link and obtaining the remote IP address from the process. To sum up, the module comprises WLAN link establishing and mobile packet domain link establishing functions, and comprises a DHCP function. In the two types of link establishing processes, a function in security authentication is also comprised, which is not related to the present patent, and will not be described in detail.

Mode two: the IP address obtaining module obtains the local IP address by establishing a WLAN link and depending on a local static IP setting or a DHCP; and obtains the remote IP address by establishing a security tunnel using a link where the local IP is located.

In the process of obtaining the local IP address, the IP address obtaining module will further obtain local route information of the terminal which is configured by the WLAN, such as gateway information at the network side; and in the process of obtaining the remote IP address, the IP address obtaining module will also obtain the local route information of the terminal which is configured by the packet domain of the core network, such as the gateway information at the network side. In addition, after obtaining the IP addresses, the terminal will also automatically generate a corresponding port at the terminal side.

For example, when the WLAN obtain the IP using the DHCP mode, the DHCP defines that the IP obtaining request response message transmitted by the WLAN network side to the terminal carries the gateway information used by the terminal on the WLAN in addition to the IP address allocated to the terminal, and a first hop of the message transmitted by the terminal on the WLAN will arrive at the gateway.

Similar to WLAN, after the packet domain link dialing, i.e., successfully performing the GPRS dialing on the terminal, the packet domain gateway of the core network performs the process of the DHCP, and allocates IP address and gateway information to the terminal.

The IP address obtaining module delivers the obtained IP address, the local route information and the port information to the route control module, and the route control module generates corresponding service route options.

The route control module is configured to establish the corresponding service route according to the route configuration information or the local or remote IP address which is newly obtained by the IP address module or an existing local or remote IP address.

For the Internet service, since the address of the Internet service server may be dynamically changed and the route configuration information thereof can be a domain name of a server providing a particular Internet service, when the service is enabled, after monitoring the enabled event, the application controller module notifies the IP address obtaining module to obtain the IP address, notifies the route control module to obtain the IP address of the corresponding Internet service server from a Domain Name Server (DNS).

For the packet domain server, the route configuration information thereof can be an IP address and port information of the service server.

The message processing unit comprises a Transfer Control Protocol/Internet Protocol (TCP/IP) module, which is configured to receive the original service message transmitted by the mobile Internet service module or the mobile packet domain service module, match the service route according to the destination address of the original service message, and encapsulate the original service message into a service data message; and after receiving and then de-encapsulating the service data message received by the message receiving/transmitting unit, transmit the de-encapsulated service data message to the corresponding mobile Internet service module or the mobile packet domain service module.

When receiving the data message transmitted by the mobile Internet service module or the mobile packet domain service module, the TCP/IP module matches a particular service route according to a destination address field in an IP message head domain field, to determine from which local device port the data is transmitted. After receiving the service data message received by the message receiving/transmitting unit and parsing the IP message head domain and the TCP or UDP message head domain, the TCP/IP module delivers them to various types of service programs.

The message receiving/transmitting unit comprises a wireless link interface and a functional interface of a wireless protocol stack user plane, wherein, the wireless link interface is configured to receive and transmit the mobile Internet network service data message; and the functional interface of the wireless protocol stack user plane functional interface is configured to receive and transmit mobile packet domain service data message.

When obtaining the remote IP address using the second mode, the route establishing unit further comprises a security tunnel establishing module, wherein, for the packet domain service which needs a security tunnel, the route configuration information further comprises security tunnel information corresponding to the security tunnel, and the security tunnel information comprises security strategy information and an IP address or a domain name of a tunnel port device at the network side; when the packet domain service which needs the security tunnel is enabled, the application controller module generates strategy items of the security tunnel according to the security strategy information, transmits the strategy items of the security tunnel and the IP address or domain name of the tunnel port device at the network side to the security tunnel establishing module, and triggers the security tunnel establishing module to establish the security tunnel; and the security tunnel establishing module establishes the security tunnel according to the triggering of the application controller module using the link where the local IP address is located, and notifies the IP address obtaining module to obtain the remote IP address using the established security tunnel.

If it is the domain name of the tunnel port device at the network side that is configured in the security strategy information, in the process of establishing the security tunnel, the security tunnel establishing module firstly obtains the IP address of the tunnel port device at the network side by inquiring the Domain Name System (DNS), and delivers the IP address of the tunnel port device at the network side to the route control module to establish tunnel route options corresponding to the local IP address.

It can be understood that the security tunnel information can correspond to one or more services which need the security tunnel.

When obtaining the remote IP address using the second mode, the message processing unit further comprises a data security module connected to the TCP/IP module, wherein, the source address and the destination address after the TCP/IP module encapsulates the original service message of the packet domain service are a remote IP address and an IP address of the packet domain service server respectively, and the TCP/IP module is configured to transmit the encapsulated data message to the data security module when it is determined that there is a need to transmit through the security tunnel; the data security module is configured to perform tunnel data encapsulation on the encapsulated message again, with the destination address of the service data message on which the tunnel encapsulation is performed being an IP address of the tunnel port device at the network side, and the data security module re-transmits the service data message on which the tunnel encapsulation is performed to the TCP/IP module; the TCP/IP module is further configured to re-match the route options according to the destination address of the service data message on which the tunnel encapsulation is performed and perform secondary message encapsulation, wherein, after the secondary encapsulation, the source address of the service data message is the local IP address; and the message receiving/transmitting unit transmits the packet domain service data message on which the secondary encapsulation is performed through the wireless link interface and the established security tunnel.

Correspondingly, after receiving the service data message received by the message receiving/transmitting unit, if the service data message is a tunnel encrypted message, the TCP/IP module is configured to forward the service data message to the data security module for tunnel de-encapsulation, and de-encapsulate the service data message which is decrypted by the data security module, and then forward the de-encapsulated service data message to the corresponding service module for processing.

For the service with an encryption mechanism, the service configuration information further comprises an encrypted member of service data streams.

The application controller module is further configured to deliver the encrypted member of the service data streams to the data security module; and the data security module performs encryption verification according to the encrypted member.

According to the information configuration conditions of the tunnel port device at the network side in the service configuration information, the data security module obtains the IP address of the tunnel port device at the network side from the application controller module or the tunnel security establishing module, to implement the tunnel encapsulation. For example, if the IP address of the tunnel port device at the network side has been configured in the service configuration information, the application controller module will directly deliver the IP address of the tunnel port device at the network side to the data security module; and if the domain name of the tunnel port device at the network side has been configured in the service configuration information, after obtaining the IP address of the tunnel port device at the network side, the security tunnel establishing module will deliver the domain name to the data security module, or the security tunnel establishing module will transfer the domain name to the application controller module, and then the application controller module will deliver the domain name to the data security module.

There are multiple implementation schemes for the security tunnel, including a tunnel implementation on the IP layer and a tunnel implementation on the data link layer. The data security module performs tunnel encapsulation according to the specific security tunnel mechanism. The specific tunnel encapsulation method is not concerned by the present invention, and no matter which tunnel encapsulation mode is used, the destination address of the service data message on which the tunnel encapsulation is performed is directed to the IP address of the tunnel port device at the network side.

On the WLAN, the TCP/IP module invokes a wireless link interface of the WLAN in the message receiving/transmitting unit to transmit and receive the service data message, and on the mobile network wireless link, the TCP/IP module invokes a functional interface in a wireless protocol stack user plane in the message receiving/transmitting unit, such as a Packet Data Convergence Protocol (PDCP) functional interface or a Point to Point Protocol (PPP) functional interface to transmit and receive the service data message.

The message receiving/transmitting unit in FIG. 1 does not only correspond to a protocol layer corresponding to transmitting and receiving a message in a terminal protocol stack when accessing the WLAN, but also corresponds to a protocol layer corresponding to transmitting and receiving a message in a user plane protocol stack when accessing a mobile network; and the processes of the packet domain dialing and accessing the WLAN can be initiated by a certain application which needs to access the network on the terminal, or can also be operated independently by a user through an interface. A plurality of wireless links use the same TCP/IP module, and the relation between the packet domain dialing function and the driving of the WLAN device and the TCP/IP module will not be discussed in the scope of the present patent.

The interface relation between various modules of the terminal is shown in FIG. 1, and it can be understood that the functions implemented by various interfaces are a part of functions of the corresponding module, and various interfaces in FIG. 1 will be simply described hereinafter.

Interface 1 is a common application programming interface of TCP/IP protocol, and the specific parameters and names of the interface may be slightly different due to the difference between the operating systems, and the interface 1 completes operations such as encapsulation, transmission and reception, de-encapsulation of the original service message between application programs and TCP/IP modules.

Interface 2 is a registration interface which is needed by the application controller module when adding or deleting a packet domain service, and with such interface, the application controller module monitors enabling/disabling event of various service modules, and receives configuration information corresponding to each service.

For interface 3, the application controller module controls the route options of the terminal according to the current application state and the route strategy in the configuration information of the terminal, and the route mechanisms in various operating systems of mobile phones are different, and therefore, the specific route modifying operations are completed by the route controller module, and such interface only delivers the route configuration information.

For Interface 4, the application controller module transmits the link information associated with the service to an IP address obtaining module through such interface.

For interface 5, the application controller module transmits strategy items of the security tunnel to the security tunnel establishing module through such interface.

For interface 6, the application controller module transmits an encrypted member of service data streams and an IP address of a tunnel port device at the network side to the data security module through such interface, to apply them to specific data encryption and verification processes.

For interface 7, the data security module completes tunnel data encapsulation in the process of transmitting data and IP data packet analysis in the process of receiving the data through such interface, and returns the decrypted and verified IP data to the TCP/IP protocol module.

When implementing the security tunnel mechanism, in the process of the terminal transmitting the data to the network side, the data security module implements tunnel packet encapsulation and corresponding encryption and verification functions through the interface 7, and after the encapsulation is completed, the data are transmitted to the TCP/IP module through the interface 7, and the TCP/IP module matches the route options and then invokes the wireless link interface of the WLAN to complete transmitting the IP message. In the process of the terminal receiving the data from the network side, the TCP/IP module receives the data from the port of the WLAN device, and after acknowledging that the data is the tunnel encrypted message, forwards the data to the data security module through the interface 7 to parse the IP message, perform the verification and decryption processes, and then forwards the data to the TCP/IP module through the interface 7 to complete the process flow of the IP message and the TCP/UDP message.

For interface 8, when transmitting the data, the TCP/IP module will refer to the service route options, to determine on which data link layer the data is transmitted from the device port. Such process is generally implemented in the TCP/IP protocol stack.

For interface 9, on the WLAN link, the TCP/IP protocol module invokes a wireless link interface of the WLAN, and on the mobile network wireless link, the TCP/IP module invokes a functional interface, such as a PDCP functional interface or a PPP functional interface, in a wireless protocol stack user plane.

The relations between various network nodes including a terminal and a service sever in a convergence network are shown in FIG. 2. The terminal in this figure is a terminal which implements the method and possesses capability of accessing a plurality of networks.

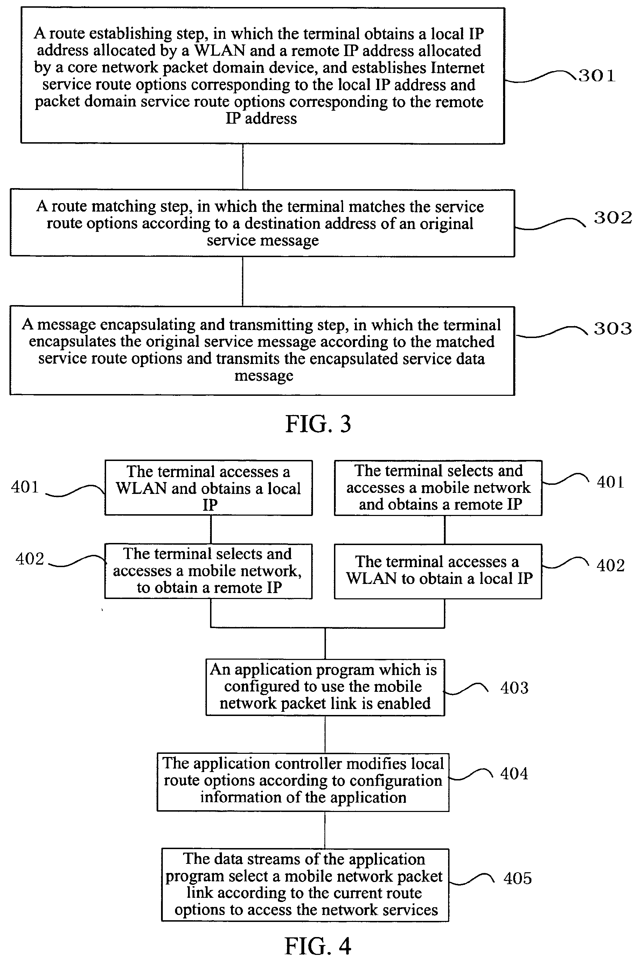

As shown in FIG. 3, the method for access control of a network service according to the present invention comprises the following steps.

In step 301, i.e., a route establishing step, the terminal obtains a local IP address allocated by a WLAN and a remote IP address allocated by a core network packet domain device, and establishes Internet service route options corresponding to the local IP address and packet domain service route options corresponding to the remote IP address.

In step 302, i.e., a route matching step, the terminal matches the service route options according to a destination address of an original service message.

In step 303, i.e., a message encapsulating and transmitting step, the terminal encapsulates the original service message according to the matched service route options and transmits the encapsulated service data message.

In the route establishing step, the terminal obtains the local IP address by accessing the WLAN and establishing a WLAN link , and obtains the remote IP address by accessing the mobile network and establishing a packet area link; and in the message encapsulating and transmitting step, a source address of the encapsulated Internet service data message is the local IP address, and a source address of the encapsulated packet domain service data message is the remote IP address. See the following embodiment one.

In the message encapsulating and transmitting step, the terminal receives and transmits the Internet service data message through a wireless link interface, and receives and transmits the packet domain service data message through a functional interface in a wireless protocol stack user plane.

In the route establishing step, the terminal establishes a WLAN link by accessing the WLAN to obtain the local IP address, and establishes a security tunnel by using the link where the local IP address is located to obtain the remote IP address, and establishes tunnel route options corresponding to the local IP address while establishing packet domain service route options corresponding to the remote IP address; and in the message encapsulating and transmitting step, a source address of the encapsulated Internet service data message is a local IP address, an inner source address of the packet domain service data message on which the secondary encapsulation is performed according to the packet domain service route options and the tunnel route options is a remote IP address, and an outer source address is a local IP address. See the following embodiment two.

In the message encapsulating and transmitting step, the terminal receives and transmits the Internet service data message and the packet domain service data message through the wireless link interface, and the packet domain service data message corresponds to a port at the terminal side of the security tunnel (i.e., a virtual device port generated when obtaining the remote IP address after the security tunnel is established).

In the route establishing step, the terminal is triggered to obtain the local IP address or the remote IP address when the network service is enabled, or the terminal actively obtains the local IP address or the remote IP address before the network service is enabled.

The terminal performs the route establishing step according to service configuration information which is preset in the terminal or dynamically downloaded to the terminal, wherein, the service configuration information comprises link information associated with the service and route configuration information. The route establishing step specifically comprises: when a certain service is enabled, the terminal determining whether to initiate a packet domain link dialing process or a WLAN link establishing process according to the link information associated with the service, until obtaining the local IP address or the remote IP address. The terminal establishes corresponding service route options according to the route configuration information or the obtained local or remote IP address.

The service configuration information further comprises security strategy information, and when a certain packet domain service which needs the security tunnel is enabled, the route establishing step further comprises: the terminal generating strategy items of the security tunnel according to the security strategy information, establishing the security tunnel using the link where the local IP is located, and establishing tunnel route options corresponding to the local IP address.

In the route matching step, the terminal matches the tunnel route options and the packet domain service route options according to the security strategy information; and
in the message encapsulating and transmitting step, the terminal performs a secondary encapsulation according to the packet domain service route options and the tunnel route options, wherein, the inner source address of the packet domain service data message on which the secondary encapsulation is performed is a remote IP address, and the outer source address is the local IP address.

The Internet service route options or the packet domain service route options are represented by means of default.

The method according to the present invention will be described in detail in conjunction with accompanying drawings and specific embodiments hereinafter.

### Embodiment one

As shown in FIG. 4, in embodiment one, an application controller of a terminal establishes a corresponding link to obtain a local or remote IP address after monitoring the enabling of the service, which specifically comprises the following steps.

In step 401, the terminal accesses a WLAN and obtains the local IP address.

The terminal enables a mobile Internet service. After the application controller module monitors a message that the service is enabled, the application controller module invokes the corresponding service configuration information, and triggers and establishes a WLAN access link according to the link configuration information associated with the service in conjunction with the current link state, to obtain the legal IP address which is allocated by the WLAN or an IP address which is set locally and statically, i.e., a local IP address.

In step 402, the terminal accesses the mobile network and obtains a remote IP address.

The terminal enables a mobile packet domain service. After the application controller module monitors a message that the service is enabled, the application controller module invokes the corresponding configuration information, and triggers and establishes a mobile network packet link according to the link configuration information associated with the service in conjunction with the current link state, to obtain an IP which is allocated by a mobile core network packet domain device to the terminal, i.e., a remote IP address.

The above steps 401 and 402 are in a random order.

When the WLAN link or the mobile packet domain link has been established and the IP has been obtained, there is no need to re-initiate a link establishing process and an IP obtaining process. At this time, the terminal possesses a local IP address and a remote IP address. For example, when the terminal has two WLAN service modules, i.e., QQ and MSN, if the local IP address has been obtained according to a QQ service, when the MSN service is then enabled, there is no need to obtain the local IP address.

In step 403, the application controller module monitors the enabling of an application program (i.e., a service) which is configured to use the mobile network packet link.

In step 404, the application controller module modifies local route options according to service configuration information of the application program.

The application controller will retrieve the route configuration information related to the packet domain service, and add a local route option through a route control module, and this route will enable a TCP/IP module to transmit all IP messages with a destination address being an IP of the mobile packet domain service server through a device port corresponding to the remote IP, and for those IP messages of which the destination addresses are not the IP address of the packet domain service server, they will be transmitted from the device port of the WLAN corresponding to the local IP address under default route control (in the present embodiment, the route options of the mobile Internet service uses a default route control method). Thus, data of two services on the current terminal are split at the terminal side, and the data transmission to each server is implemented through the WLAN link and the mobile packet domain link respectively, and the terminal implements transmitting two types of services simultaneously under two access modes.

In step 405, the data streams of the application program select a mobile network packet link according to the matched route options to access the network services.

### Embodiment two

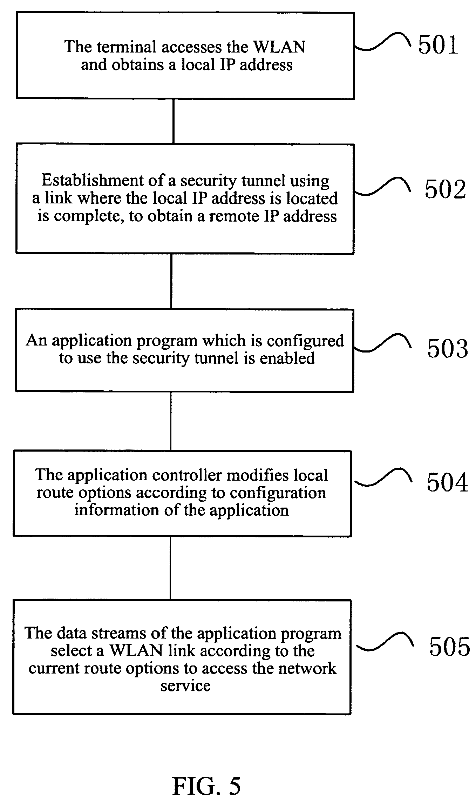

FIG. 5 is a diagram of embodiment two according to the present invention. The link configuration of a mobile packet domain service can be set as selecting a security tunnel between a terminal on the WLAN link and the mobile packet domain device to access a packet domain service server, and the process of accessing the mobile packet domain service comprises the following steps.

In step 501, the terminal accesses the WLAN and obtains a local IP address.

A mobile Internet service is enabled on the terminal, and after monitoring a message that the service is enabled, the application controller module invokes the corresponding service configuration information, and triggers and establishes a WLAN access link according to the link configuration information associated with the service in conjunction with the current link state, to obtain a legal IP address which is allocated by the WLAN or an IP address which is set locally and statically, i.e., a local IP address, by verification of the access of the WLAN.

In step 502, the terminal establishes a security tunnel using a link where the local IP address is located, to obtain a remote IP address.

A mobile packet domain service is enabled on the terminal, and after monitoring a message that the service is enabled, the application controller module invokes the corresponding configuration information, and establishes a security tunnel using a link where the local IP address is located according to the service related link configuration information in conjunction with the current link state, to obtain an IP which is allocated by a mobile core network packet device to the terminal, i.e., a remote IP address.

In an actual network deployment, the tunnel port device at the network side and the mobile core network packet device are set together in some cases, and are physically represented as one device, and the tunnel port device at the network side and the mobile core network packet device as described in the present invention are two logical functional entities.

After the terminal initiates a process of mobile packet domain dialing and successfully completes the dialing, the core network packet domain device allocates a remote IP address to the terminal, and this IP address corresponds to a port at the security tunnel terminal side locally at the terminal. The terminal can access the packet domain service server or communicate with a service opposite end through the IP.

In the embodiment, the step 502 must be based on the step 501.

When the WLAN link and the security tunnel have been established and the IP has been obtained, there is no need to re-initiate an IP obtaining process. At this time, the terminal possesses a local IP address and a remote IP address and maintains the local IP address and the remote IP address effective.

In step 503, the application controller module monitors the enabling of an application program (i.e., a service) which is configured to use the security tunnel.

In step 504, the application controller module modifies local route options according to service configuration information of the application program.

The application controller will retrieve the route configuration information associated to the packet domain service, and add a local route option through a route control module, and the route will enable a TCP/IP module to transmit all IP messages with a destination address being an IP of the mobile packet domain service server through a device port corresponding to the remote IP. The device port is the port of the security tunnel at the terminal side which is referred to above. In the process of transmitting the data through the port of the security tunnel, the data security module takes over the transmission process when the TCP/IP module submits the data to the data link layer, and the data security module re-forwards the data to the TCP/IP module after the data encryption and the tunnel encapsulation of the data message are completed. At this time, the encryption and the tunnel encapsulation on the packet domain service data message have been completed, and the destination address of the IP message is not the IP address of the service server any more, and instead, is the address of the device at network side of the security tunnel. According to the above-described process, such IP message will not match the local route options of the packet domain service any more, and be transmitted by a local IP address and a WLAN device port corresponding to it according to a default route. The device at the security tunnel network side will complete de-encapsulation and decryption operations of the tunnel encapsulation of such IP message, and delivers the IP message of the inner service data to the packet domain service server.

There are multiple implementation schemes for the security tunnel, including a tunnel implementation on an IP layer and a tunnel implementation on a data link layer. When the terminal uses the security tunnel mechanism, there is a need to perform decryption and verification calculations on the IP packet of the packet domain service or the message of the data link layer. The terminal needs to modify the receiving/transmitting mechanism of the message of data link layer which is provided by the operating system. When transmitting the IP message of the packet domain service on the security tunnel, the terminal takes over the data transmitting interface of the data link layer by a data security module independent of the TCP/IP protocol stack, to implement the encapsulation and corresponding encryption and verification functions of the tunnel packet. After the encapsulation is completed, the terminal invokes the IP message transmitting interface of the TCP/IP, and the TCP/IP protocol stack of the operating system of the terminal refers to the route options which are controlled by the application controller again, to complete the encapsulation of the outer IP header and transmit the IP message on the WLAN device. After the device at the tunnel core network side encapsulates the IP packet transmitted by the packet domain service server to the terminal, the encapsulated IP packet is transmitted to the terminal through the transmission of the security tunnel. Opposite to the above-described process, the TCP/IP protocol stack of the operating system of the terminal receives data from the WLAN device port, forwards the data to the data security module to parse an IP message, and verification and decryption processes are performed after the data security module acknowledges that it is a tunnel encrypted message, and then the message is delivered to the message receiving interface of the data link layer provided by the operating system, an IP message receiving function of the TCP/IP protocol stack of the terminal obtains an inner IP message, and at this time, the message has been restored as a packet domain IP packet, and the IP, TCP and UDP headers are parsed and then be submitted to an upper layer applications for processing.

In step 505, the data streams of the application program select a WLAN link according to the matched route options to access the network service.

Compared to embodiment one, the difference is in that the mobile packet domain services on the client do not pass through the mobile packet domain link, and instead, pass through the WLAN link, and can still access the mobile packet domain services on the premise of establishing the security tunnel. The process of establishing the security tunnel on the WLAN is not in the scope of the discussion of the present invention, and the security tunnel on the WLAN can be basically equivalent to the packet domain link in the mobile network in terms of security and functional requirements after enough security measures are implemented. At this time, the Internet application can be accessed through the WLAN.

Similar to the process of the above-described embodiment one, the application controller will retrieve the route configuration information associated with the packet domain service, and add a local route through a route control module, and the route will enable a TCP/IP module to transmit all IP messages with a destination address being an IP of the mobile packet domain service server through a device port corresponding to the remote IP.

In the above embodiment one and embodiment two, the message processing unit will refer to established service route options when transmitting data, while the service route options with specific destination address in the route establishing unit are established due to the enabling of the mobile packet domain service, and the route establishing unit provides a default route strategy corresponding to the local IP address at the same time. In the process of transmitting the mobile Internet service data message and the packet domain service data message on which the tunnel encapsulation is performed, as the destination address is not matched with the established service route options, thus the mobile Internet service data message and/or the packet domain service data message on which the tunnel encapsulation is performed are defaulted to match the default route strategy, and the data are transmitted from the local IP address of WLAN. In the local route strategy, the local IP and the WLAN physical device port will be linked together, to ensure that the data are transmitted out from this link of WLAN. In addition, in the process of obtaining a local IP on the WLAN, the WLAN network side will transmit the configuration of the gateway in the process of allocating the IP, and the gateway in the default route used for the wireless Internet service on the terminal is configured thereby.

In the above two embodiments, all the route options corresponding to the local IP address use a default route mode, thus the process of matching the route can be simplified, and is a preferable implementation mode in the present invention. And similarly, in embodiment one, the route options corresponding to the remote IP address can also be represented by a default mode. It can be understood that, the default route mode is substantively one default route option. The terminal determines a representation mode of the service route options and/or the tunnel route options according to the local route strategy, and the substances thereof are the same no matter whether the default mode or other mode is used to represent the service route options of various services.

### Application examples

When the security tunnel uses the IPsec technology and the operating system uses Linux, assume that the terminal completes the verification of the WLAN access and then obtains a local IP being 10.30.1.10, and the IP address of the tunnel port device at the network side which is obtained by the domain name parse being 10.30.1.100. At this time, a part of contents of a route table of the operating system are shown as follows:

**Table 1**

| Destination | Gateway | Genmask | Flags | Metric | Ref | Use | Iface |
|---|---|---|---|---|---|---|---|
| Default | 10.30.1.10 | 0.0.0.0 | UG | 0 | 0 | 0 | eth0 |

A remote IP address allocated to the terminal by the core network packet domain device after the tunnel is successfully established is 177.136.1.10, and an address of the server for service of the mobile which has registered in the application controller is 177.136.5.20. After the service is enabled on the terminal, the process of establishing the security tunnel is first triggered, and after the tunnel is successfully established, a part of contents in the route table of the operating system may be as follows.

**Table 2**

| Destination | Gateway | Genmask | Flags | Metric | Ref | Use | Iface |
|---|---|---|---|---|---|---|---|
| 177.136.1.10 | * | 255.255.255.255 | UH | 0 | 0 | 0 | tunnel |
| 10.30.1.10 | * | 255.255.255.255 | UH | 0 | 0 | 0 | eth0 |
| Default | 10.30.1.10 | 0.0.0.0 | UG | 0 | 0 | 0 | eth0 |

Table 2 is temporary status in the route and management process of the terminal, and different implementations may have different results. After acknowledging that the tunnel is successfully established and the application is successfully enabled, the application manger modifies the route on basis of the above-described route table, so that an IP message transmitted to the address 177.136.5.20 of the service server must be transmitted through a virtual device corresponding to 177.136.1.10, and at this time, the route is modified as follows:

**Table 3**

| Destination | Gateway | Genmask | Flags | Metric | Ref | Use | Iface |
|---|---|---|---|---|---|---|---|
| 177.136.1.10 | * | 255.255.255.255 | UH | 0 | 0 | 0 | tunnel |
| 177.136.5.20 | 177.136.1.10 | 255.255.255.255 | UG | 0 | 0 | 0 | tunnel |
| 10.30.1.10 | * | 255.255.255.255 | UH | 0 | 0 | 0 | eth0 |
| Default | 10.30.1.10 | 0.0.0.0 | UG | 0 | 0 | 0 | eth0 |

Under the control of the route table, only the IP message of the mobile packet domain service will be transmitted to the data security module through the tunnel of the virtual device, and then is transmitted out by a real WLAN device after the encryption and the verification processes are completed, and at this time, the destination address in the head domain of the IP data packet is 10.30.1.100, and the destination address of the inner IP head domain is 177.30.5.20. If the terminal is accessing the INTERNET service at the same time, the access can be implemented by the default route through the wireless network device interface on the terminal directly. When there is a new mobile packet domain service which is enabled and initiates a network connection, the application controller inserts a new route recording in the current route table, treats the IP of the server which newly enables a service as the destination address, treats 177.136.1.10 as a gateway, and transmits on the virtual tunnel device.

In conclusion, with the method according to the present invention, when the terminal accesses the WLAN and there is a mobile network packet domain link at the same time, the terminal can access the service server or interact with a correspondent node through the packet domain link, and at the same time, the terminal can also access the application service on the Internet through the WLAN directly, and both types of the applications can be implemented simultaneously. When there is a security tunnel on the mobile network packet domain link, all data messages of the packet domain service can be performed with data encryption and verification according to respective security strategies, and interact with the service server or the correspondent node through the tunnel, and do not produce influence on the access of the Internet application. The implementation of the present method is only limited to the terminal, and does not have any requirement on the modification of the network devices.

For example, after a certain terminal with WLAN access capability and WCDMA access capability uses the method according to the present invention, the terminal selects a certain WLAN and accesses the WLAN, and the terminal receives one MMS notification using this wireless network and using an IP-based voice service (such as Skype) on the terminal while the IP-based voice service is running, and if the terminal prompts a user whether to receive the MMS and the user selects to receive the MMS, or the terminal defines to automatically receive the MMS by default, the terminal initiates a process of establishing a packet domain link of WCDMA and accesses an MMS server of mobile operators through this link to receive the MMS, and the MMS receiving process does not influence the ongoing IP voice service.

Based on the idea of the present invention, the present invention is also suitable to a terminal with capabilities of accessing three or more networks, and as long as the terminal obtains IP addresses allocated by various networks supported by itself and establishes service route options of various network corresponding to the various IP addresses according to the local route strategy, thus, when accessing a certain network service, the terminal can match the service route options according to the destination address of the original service message, and can encapsulate a service data message according to the matched service route options, and receive and transmit the service data message using the IP address allocated by the corresponding network, so that the various network services will not influence with each other, which makes multiple network services be used in parallel become possible.

The service route options described in the present invention can comprise different route information according to existing route mechanisms or strategies in the network, such as an IP address of the service server of the network side (or a correspondent node), gateway information of the network side, port information of the terminal side, etc., and it can be understood that, the purpose of establishing the service route options is to implement the match of the service route, and accordingly encapsulate and transmit the service message. In view of the principle, the service route options of the present invention at least comprise route information which is required to transmit and receive the service data message normally according to the network to which the service belongs.

A person having ordinary skill in the art can understand that all or a part of steps in the above method can be implemented by programs instructing related hardware, and the programs can be stored in a computer readable storage medium, such as a read-only memory, disk or disc etc. Alternatively, all or a part of steps in the above embodiments can also be implemented by one or more integrated circuits. Accordingly, various modules/units in the above embodiments can be implemented in a form of hardware, or can also be implemented in a form of software functional module. The present invention is not limited to any particular form of a combination of hardware and software.

### Industrial Applicability

The present invention describes a method for access control of a mobile service on a Fix-Mobile Convergence (FMC) terminal. Such mobile terminal can not only access a Wireless Local Area Network (WLAN), but also can access mobile networks such as CDMA 1x, CDMA evdo, GSM/GPRS, UMTS, TDS-CDMA etc. With the method described in the present invention, different applications on the terminal can simultaneously use different wireless access networks and use mobile application services in the network based on different configuration requirements.

## Claims

1. A method for access control of a network service, which is implemented based on a terminal with capability of accessing a wireless local area network and capability of accessing a mobile network, **characterized by** comprising:
a route establishing step (301), in which the terminal obtains a first Internet Protocol, IP, address allocated by a wireless local area network, WLAN, and a second IP address allocated by a mobile core network packet domain device according to service configuration information, wherein the service configuration information comprises link information associated with a service and route configuration information, wherein the route configuration information comprises a domain name of a WLAN service server, or comprises an IP address and port information of a mobile packet domain service server, and establishes Internet service route options corresponding to the first IP address and mobile packet domain service route options corresponding to the second IP address according to the route configuration information; these route options enable IP messages with a destination address being an IP of the mobile packet domain service server to be transmitted through a device port corresponding to the second IP address, and IP messages with a destination address being not the IP of the mobile packet domain service server to be transmitted through a device port of the WLAN corresponding to the first IP address;
a route matching step (302), in which the terminal matches the service route options according to a destination address of an original service message; and
a message encapsulating and transmitting step (303), in which the terminal encapsulates the original service message according to the matched service route options and transmits the encapsulated service data message.

2. The method according to claim 1, wherein,
in the route establishing step, the terminal obtains the first IP address by accessing the WLAN and establishing a WLAN link, and obtains the second IP address by accessing the mobile network and establishing a packet area link
in the message encapsulating and transmitting step, a source address of the encapsulated Internet service data message is the first IP address, and a source address of the encapsulated mobile packet domain service data message is the second IP address; preferably, in the message encapsulating and transmitting step, the terminal receives and transmits the Internet service data message through a wireless link interface, and receives and transmits the mobile packet domain service data message through a functional interface of a wireless protocol stack user plane.

3. The method according to claim 1, wherein,
in the route establishing step, the terminal obtains the first IP address by accessing the WLAN and establishing a WLAN link, and establishes a security tunnel by using the link where the first IP address is located to obtain the second IP address, and establishes tunnel route options corresponding to the first IP address while establishing mobile packet domain service route options corresponding to the second IP address;
the message encapsulating and transmitting step further comprises: a source address of the encapsulated Internet service data message being the first IP address, an inner source address of the mobile packet domain service data message on which the secondary encapsulation is performed according to the mobile packet domain service route options and the tunnel route options being the second IP address, and an outer source address being the first IP address; preferably, in the message encapsulating and transmitting step, the terminal receives and transmits the Internet service data message and the mobile packet domain service data message through the wireless link interface, and the mobile packet domain service data message corresponds to a port at the terminal side of the security tunnel.

4. The method according to claim 1, wherein, in the route establishing step, the terminal is triggered to obtain the first IP address or the second IP address when the network service is enabled, or the terminal actively obtains the first IP address or the second IP address before the network service is enabled.

5. The method according to claim 1, 2 or 3, further comprising: the terminal performing the route establishing step according to service configuration information which is preset in the terminal or dynamically downloaded to the terminal, wherein, the service configuration information comprises link information associated with the service and route configuration information;
the route establishing step further comprises:
when the service is enabled, the terminal determining whether to initiate a mobile packet domain link dialing process or a WLAN link establishing process according to the link information associated with the service, until obtaining the first IP address or the second IP address; and the terminal establishing corresponding service route options according to the route configuration information and the obtained first IP address or the second IP address.

6. The method according to claim 5, wherein,
the Internet service route options or the mobile packet domain service route options are represented by means of default;
or, the service configuration information further comprises security strategy information, and when the mobile packet domain service which needs the security tunnel is enabled, the route establishing step further comprises: the terminal generating strategy items of the security tunnel according to the security strategy information, establishing the security tunnel using the link where the first IP is located, and establishing tunnel route options corresponding to the first IP address; in the route matching step, the terminal matches the tunnel route options and the mobile packet domain service route options according to the security strategy information; the message encapsulating and transmitting step further comprises: the terminal performing a secondary encapsulation according to the mobile packet domain service route options and the tunnel route options, wherein, the inner source address of the mobile packet domain service data message on which the secondary encapsulation is performed is the second IP address, and the outer source address is the first IP address;
or, the Internet service route options and the tunnel route options are represented by means of default, or the mobile packet domain service route options are represented by means of default.

7. A terminal with capability of accessing a wireless local area network, WLAN, and capability of accessing a mobile network, **characterized by** comprising: an application unit, a route control unit, a message processing unit and a message receiving/transmitting unit, wherein,
the application unit is configured to manage service configuration information of a mobile packet domain service and an Internet service, and generate and process an original service message, wherein the service configuration information comprises link information associated with a service and route configuration information, wherein the route configuration information comprises a domain name of a WLAN service server, or comprises an IP address and port information of a mobile packet domain service server;
the route establishing unit is connected to the application unit, and is configured to obtain a first Internet Protocol, IP, address allocated by the WLAN and a second IP address allocated by a mobile core network packet domain device according to the service configuration information of the application unit, and establish Internet service route options corresponding to the first IP address and mobile packet domain service route options corresponding to the second IP address according to the route configuration information; these route options enable IP messages with a destination address being an IP of the mobile packet domain service server to be transmitted through a device port corresponding to the second IP, and IP messages with a destination address being not the IP of the mobile packet domain service server to be transmitted through a device port of the WLAN corresponding to the first IP address;
the message processing unit is connected to the application unit and the route establishing unit, and is configured to match the service route options which are established by the route establishing unit according to a destination address of an original service message, and encapsulate the original service message into a service data message according to the matched service route options and de-encapsulate the service data message which is received by the message receiving/transmitting unit into the original service message; and
the message receiving/transmitting unit is connected to the message processing unit, and is configured to receive the service data message with a destination address being the first IP address or the second IP address which is transmitted by the network side, and transmit the service data message with the source address being the first IP address or the second IP address which is encapsulated and processed by the message processing unit to the network side.

8. The terminal according to claim 7, wherein,
the application unit comprises one or more mobile Internet service modules, one or more mobile packet domain service modules and an application controller module, and the route establishing unit comprises an IP address obtaining module and a route control module, wherein,
the mobile Internet service modules are configured to operate a mobile Internet service and generate and process the original service message;
the mobile packet domain service modules are configured to operate the mobile packet domain service, and generate and process the original service message;
the application controller module is configured to manage the services in the mobile Internet service module and the mobile packet domain service module, and record corresponding service configuration information, transmit the corresponding service configuration information to the route establishing unit when the service is enabled, wherein, the service configuration information comprises link information associated with the service and route configuration information;
the IP address obtaining module is configured to determine whether to initiate a mobile packet domain link dialing process or a WLAN link establishing process according to the link information associated with the service, until obtaining the first IP address or the second IP address; and
the route control module is configured to establish corresponding service route options according to the route configuration information and the first IP address or the second IP address which is newly obtained by the IP address obtaining module or an existing first IP address or second IP address.

9. The terminal according to claim 8, wherein, the IP address obtaining module is configured to obtain the first IP address by establishing a WLAN link and depending on a local static IP setting or DHCP; and obtain the second IP address by establishing a mobile packet domain link.

10. The terminal according to claim 8, wherein,
the IP address obtaining module is configured to obtain the first IP address by establishing a WLAN link and depending on the local static IP setting or DHCP; and obtain the second IP address by establishing a security tunnel using a link where the first IP is located;
the route establishing unit further comprises a security tunnel establishing module, wherein, the route configuration information further comprises security tunnel information corresponding to the security tunnel, and the security tunnel information comprises security strategy information and an IP address or a domain name of a tunnel port device at the network side;
the application controller module is further configured to when the mobile packet domain service which needs the security tunnel is enabled, generate strategy items of the security tunnel according to the security strategy information, transmit the strategy items of the security tunnel and the IP address or domain name of the tunnel port device at the network side to the security tunnel establishing module to trigger the security tunnel establishing module to establish the security tunnel;
the security tunnel establishing module is configured to establish the security tunnel using the link where the first IP address is located according to the triggering of the application controller module, and notify the IP address obtaining module; and
the IP address obtaining module is configured to obtain the second IP address using the established security tunnel.

11. The terminal according to claim 10, wherein,
the message processing unit comprises a Transfer Control Protocol/Internet Protocol (TCP/IP) module, which is configured to receive the original service message transmitted by the mobile Internet service module or the mobile packet domain service module, and match the service route options according to the destination address of the original service message and encapsulate the original service message into a service data message; after receiving and then de-encapsulating the service data message received by the message receiving/transmitting unit, transmit the de-encapsulated service data message to the corresponding mobile Internet service module or the mobile packet domain service module.

12. The terminal according to claim 10, wherein,
the message receiving/transmitting unit comprises a wireless link interface and a functional interface of a wireless protocol stack user plane, wherein,
the wireless link interface is configured to receive and transmit the mobile Internet network service data message; and
the functional interface of the wireless protocol stack user plane is configured to receive and transmit mobile packet domain service data message.

13. The terminal according to claim 10, wherein,
the message processing unit further comprises a data security module connected to the TCP/IP module,
the TCP/IP module is further configured to make the source address and the destination address of the encapsulated original service message of the mobile packet domain service be a second IP address and an IP address of the mobile packet domain service server respectively, and transmit the encapsulated data message to the data security module when it is determined that there is a need to transmit through the security tunnel;
the data security module is configured to perform tunnel data encapsulation on the encapsulated message again, and transmit the service data message, on which the tunnel encapsulation is performed and then the destination address of which is an IP address of the tunnel port device at the network side, to the TCP/IP module again;
the TCP/IP module is further configured to match the route options according to the destination address of the service data message on which the tunnel encapsulation is performed and perform secondary message encapsulation, wherein, after the secondary encapsulation, the source address of the service data message is the first IP address; and
the message receiving/transmitting unit is further configured to transmit the mobile packet domain service data message on which the secondary encapsulation is performed through the wireless link interface and the established security tunnel;
preferably, wherein, the service configuration information further comprises an encrypted member of service data streams,
the application controller module is further configured to deliver the encrypted member of the service data streams to the data security module; and
the data security module is further configured to perform encryption verification according to the encrypted member.

## Patentansprüche

1. Ein Verfahren für die Zugriffssteuerung eines Netzdienstes, das auf der Basis eines Endgeräts mit der Fähigkeit zum Zugreifen auf ein drahtloses lokales Datennetz und der Fähigkeit zum Zugreifen auf ein Mobilfunknetz umgesetzt wird, **dadurch gekennzeichnet, dass** es Folgendes beinhaltet:
einen Leitwegetablierungsschritt (301), in dem das Endgerät eine erste Internetprotokolladresse, IP-Adresse, die durch ein drahtloses lokales Datennetz, WLAN, zugewiesen wird, und eine zweite IP-Adresse, die durch eine Mobil-Kernnetz-Paketdomänen-Vorrichtung zugewiesen wird, gemäß Dienstkonfigurationsinformationen erhält, wobei die Dienstkonfigurationsinformationen mit einem Dienst assoziierte Linkinformationen und Leitwegkonfigurationsinformationen beinhalten, wobei die Leitwegkonfigurationsinformationen einen Domänennamen eines WLAN-Dienstservers beinhalten oder eine IP-Adresse und Portinformationen eines Mobilpaketdomänendienstservers beinhalten, und Internetdienstleitwegoptionen entsprechend der ersten IP-Adresse und Mobilpaketdomänendienstleitwegoptionen entsprechend der zweiten IP-Adresse gemäß den Leitwegkonfigurationsinformationen etabliert; wobei diese Leitwegoptionen ermöglichen, dass IP-Nachrichten mit einer Zieladresse, die eine IP des Mobilpaketdomänendienstservers ist, durch einen Vorrichtungsport, der der zweiten IP-Adresse entspricht, übermittelt werden und dass IP-Nachrichten mit einer Zieladresse, die nicht die IP des Mobilpaketdomänendienstservers ist, durch einen Vorrichtungsport des WLAN, der der ersten IP-Adresse entspricht, übermittelt werden;
einen Leitwegabgleichschritt (302), in dem das Endgerät die Dienstleitwegoptionen gemäß einer Zieladresse einer ursprünglichen Dienstnachricht abgleicht; und
einen Nachrichteneinkapselungs- und -übermittlungsschritt (303), in dem das Endgerät die ursprüngliche Dienstnachricht gemäß den abgeglichenen Dienstleitwegoptionen einkapselt und die eingekapselte Dienstdatennachricht übermittelt.

2. Verfahren gemäß Anspruch 1, wobei
das Endgerät in dem Leitwegetablierungsschritt die erste IP-Adresse durch Zugreifen auf das WLAN und Etablieren eines WLAN-Links erhält und die zweite IP-Adresse durch Zugreifen auf das Mobilfunknetz und Etablieren eines Paketbereichlinks erhält, wobei, in dem Nachrichteneinkapselungs- und -übermittlungsschritt, eine Quelladresse der eingekapselten Internetdienstdatennachricht die erste IP-Adresse ist und eine Quelladresse der eingekapselten Mobilpaketdomänendienstdatennachricht die zweite IP-Adresse ist; wobei das Endgerät in dem Nachrichteneinkapselungs- und -übermittlungsschritt vorzugsweise die Internetdienstdatennachricht durch eine Drahtloslinkschnittstelle empfängt und übermittelt und die Mobilpaketdomänendienstdatennachricht durch eine funktionelle Schnittstelle einer Benutzerebene des Drahtlosprotokollstapels empfängt und übermittelt.

3. Verfahren gemäß Anspruch 1, wobei
das Endgerät in dem Leitwegetablierungsschritt die erste IP-Adresse durch Zugreifen auf das WLAN und Etablieren eines WLAN-Links erhält und durch Verwenden des Links einen Sicherheitstunnel etabliert, wo die erste IP-Adresse lokalisiert ist, um die zweite IP-Adresse zu erhalten, und Tunnelleitwegoptionen entsprechend der ersten IP-Adresse etabliert, während Mobilpaketdomänendienstleitwegoptionen entsprechend der zweiten IP-Adresse etabliert werden;
der Nachrichteneinkapselungs- und -übermittlungsschritt ferner Folgendes beinhaltet:
Eine Quelladresse der eingekapselten Internetdienstdatennachricht ist die erste IP-Adresse, eine innere Quelladresse der Mobilpaketdomänendienstdatennachricht, an der die zweite Einkapselung gemäß den Mobilpaketdomänendienstleitwegoptionen und den Tunnelleitwegoptionen durchgeführt wird, ist die zweite IP-Adresse, und eine äußere Quelladresse ist die erste IP-Adresse; das Endgerät empfängt und übermittelt in dem Nachrichteneinkapselungs- und -übermittlungsschritt vorzugsweise die Internetdienstdatennachricht und die Mobilpaketdomänendienstdatennachricht durch die Drahtloslinkschnittstelle, und die Mobilpaketdomänendienstdatennachricht entspricht einem Port an der Endgeräteseite des Sicherheitstunnels.

4. Verfahren gemäß Anspruch 1, wobei das Endgerät in dem Leitwegetablierungsschritt veranlasst wird, die erste IP-Adresse oder die zweite IP-Adresse zu erhalten, wenn der Netzdienst freigegeben wird, oder das Endgerät die erste IP-Adresse oder die zweite IP-Adresse aktiv erlangt, bevor der Netzdienst freigegeben wird.

5. Verfahren gemäß Anspruch 1, 2 oder 3, das ferner Folgendes beinhaltet: Das Endgerät führt den Leitwegetablierungsschritt gemäß Dienstkonfigurationsinformationen durch, die in dem Endgerät voreingestellt sind oder dynamisch in das Endgerät heruntergeladen werden, wobei die Dienstkonfigurationsinformationen mit dem Dienst assoziierte Linkinformationen und Leitwegkonfigurationsinformationen beinhalten;
der Leitwegetablierungsschritt beinhaltet ferner Folgendes:
Wenn der Dienst freigegeben wird, bestimmt das Endgerät, ob ein Wahlvorgang für ein Mobilpaketdomänenlink oder ein WLAN-Linketablierungsvorgang gemäß den mit dem Dienst assoziierten Linkinformationen initiiert werden soll, bis die erste IP-Adresse oder die zweite IP-Adresse erhalten wird; und das Endgerät etabliert entsprechende Dienstleitwegoptionen gemäß den Leitwegkonfigurationsinformationen und der erhaltenen ersten IP-Adresse oder der zweiten IP-Adresse.

6. Verfahren gemäß Anspruch 5, wobei
die Internetdienstleitwegoptionen oder die Mobilpaketdomänendienstleitwegoptionen mittels Vorgabe dargestellt werden;
oder die Dienstkonfigurationsinformationen ferner Sicherheitsstrategieinformationen beinhalten, und wenn der Mobilpaketdomänendienst, der den Sicherheitstunnel benötigt, freigegeben wird, der Leitwegetablierungsschritt ferner Folgendes beinhaltet:
Das Endgerät erzeugt Strategieelemente des Sicherheitstunnels gemäß den Sicherheitsstrategieinformationen, etabliert den Sicherheitstunnel unter Verwendung des Links, wo die erste IP lokalisiert ist, und etabliert Tunnelleitwegoptionen entsprechend der ersten IP-Adresse; wobei das Endgerät in dem Leitwegabgleichschritt die Tunnelleitwegoptionen und die Mobilpaketdomänendienstleitwegoptionen gemäß den Sicherheitsstrategieinformationen abgleicht; wobei der Nachrichteneinkapselungs- und -übermittlungsschritt ferner Folgendes beinhaltet: Das Endgerät führt eine sekundäre Einkapselung gemäß den Mobilpaketdomänendienstleitwegoptionen und den Tunnelleitwegoptionen durch, wobei die innere Quelladresse der Mobilpaketdomänendienstdatennachricht, an der die sekundäre Einkapselung durchgeführt wird, die zweite IP-Adresse ist, und die äußere Quelladresse die erste IP-Adresse ist;
oder die Internetdienstleitwegoptionen und die Tunnelleitwegoptionen mittels Vorgabe dargestellt werden oder die Mobilpaketdomänendienstleitwegoptionen mittels Vorgabe dargestellt werden.

7. Ein Endgerät mit der Fähigkeit zum Zugreifen auf ein drahtloses lokales Datennetz, WLAN, und der Fähigkeit zum Zugreifen auf ein Mobilfunknetz, **dadurch gekennzeichnet, dass** es Folgendes beinhaltet: eine Anwendungseinheit, eine Leitwegsteuereinheit, eine Nachrichtenverarbeitungseinheit und eine Nachrichtenempfangs-/-übermittlungseinheit, wobei
die Anwendungseinheit konfiguriert ist, um Dienstkonfigurationsinformationen eines Mobilpaketdomänendienstes und eines Internetdienstes zu verwalten und eine ursprüngliche Dienstnachricht zu erzeugen und zu verarbeiten, wobei die Dienstkonfigurationsinformationen mit einem Dienst assoziierte Linkinformationen und Leitwegkonfigurationsinformationen beinhalten, wobei die Leitwegkonfigurationsinformationen einen Domänennamen eines WLAN-Dienstservers beinhalten oder eine IP-Adresse und Portinformationen eines Mobilpaketdomänendienstservers beinhalten;
die Leitwegetablierungseinheit mit der Anwendungseinheit verbunden ist und konfiguriert ist, um eine erste Internetprotokolladresse, IP-Adresse, die durch das WLAN zugewiesen wird, und eine zweite IP-Adresse, die durch eine Mobil-Kernnetz-Paketdomänen-Vorrichtung zugewiesen wird, gemäß den Dienstkonfigurationsinformationen der Anwendungseinheit zu erhalten und Internetdienstleitwegoptionen entsprechend der ersten IP-Adresse und Mobilpaketdomänendienstleitwegoptionen entsprechend der zweiten IP-Adresse gemäß den Leitwegkonfigurationsinformationen zu etablieren; wobei diese Leitwegoptionen ermöglichen, dass IP-Nachrichten mit einer Zieladresse, die eine IP des Mobilpaketdomänendienstservers ist, durch einen Vorrichtungsport, der der zweiten IP entspricht, übermittelt werden und dass IP-Nachrichten mit einer Zieladresse, die nicht die IP des Mobilpaketdomänendienstservers ist, durch einen Vorrichtungsport des WLAN, der der ersten IP-Adresse entspricht, übermittelt werden; die Nachrichtenverarbeitungseinheit mit der Anwendungseinheit und der Leitwegetablierungseinheit verbunden ist und konfiguriert ist, um die Dienstleitwegoptionen, welche durch die Leitwegetablierungseinheit gemäß einer Zieladresse einer ursprünglichen Dienstnachricht etabliert werden, abzugleichen und die ursprüngliche Dienstnachricht in einer Dienstdatennachricht gemäß den abgeglichenen Dienstleitwegoptionen einzukapseln und die Dienstdatennachricht, welche durch die Nachrichtenempfangs-/-übermittlungseinheit empfangen wird, in die ursprüngliche Dienstnachricht zu entkapseln; und
die Nachrichtenempfangs-/-übermittlungseinheit mit der Nachrichtenverarbeitungseinheit verbunden ist und konfiguriert ist, um die Dienstdatennachricht mit einer Zieladresse, die die erste IP-Adresse oder die zweite IP-Adresse ist, welche durch die Netzseite übermittelt wird, zu empfangen und die Dienstdatennachricht mit der Quelladresse, die die erste IP-Adresse oder die zweite IP-Adresse ist, welche eingekapselt und durch die Nachrichtenverarbeitungseinheit verarbeitet wird, an die Netzseite zu übermitteln.

8. Endgerät gemäß Anspruch 7, wobei
die Anwendungseinheit ein oder mehrere Mobilinternetdienstmodule, ein oder mehrere Mobilpaketdomänendienstmodule und ein Anwendungssteuerungsmodul beinhaltet und die Leitwegetablierungseinheit ein IP-Adressenerhaltungsmodul und ein Leitwegsteuermodul beinhaltet, wobei
die Mobilinternetdienstmodule konfiguriert sind, um einen Mobilinternetdienst zu betreiben und die ursprüngliche Dienstnachricht zu erzeugen und zu verarbeiten; die Mobilpaketdomänendienstmodule konfiguriert sind, um den Mobilpaketdomänendienst zu betreiben und die ursprüngliche Dienstnachricht zu erzeugen und zu verarbeiten;
das Anwendungssteuerungsmodul konfiguriert ist, um die Dienste in dem Mobilinternetdienstmodul und dem Mobilpaketdomänendienstmodul zu verwalten und entsprechende Dienstkonfigurationsinformationen aufzuzeichnen, die entsprechenden Dienstkonfigurationsinformationen an die Leitwegetablierungseinheit zu übermitteln, wenn der Dienst freigegeben wird, wobei die Dienstkonfigurationsinformationen mit dem Dienst assoziierte Linkinformationen und Leitwegkonfigurationsinformationen beinhalten;
das IP-Adressenerhaltungsmodul konfiguriert ist, um zu bestimmen, ob ein Wahlvorgang für ein Mobilpaketdomänenlink oder ein WLAN-Linketablierungsvorgang gemäß den mit dem Dienst assoziierten Linkinformationen initiiert werden soll, bis die erste IP-Adresse oder die zweite IP-Adresse erhalten wird; und
das Leitwegsteuermodul konfiguriert ist, um entsprechende Dienstleitwegoptionen gemäß den Leitwegkonfigurationsinformationen und der ersten IP-Adresse oder der zweiten IP-Adresse, die durch das IP-Adressenerhaltungsmodul neu erhalten wurde oder eine bestehende erste IP-Adresse oder zweite IP-Adresse ist, zu etablieren.

9. Endgerät gemäß Anspruch 8, wobei das IP-Adressenerhaltungsmodul konfiguriert ist, um die erste IP-Adresse durch Etablieren eines WLAN-Links und abhängig von einer lokalen statischen IP-Einstellung oder DHCP zu erhalten; und die zweite IP-Adresse durch Etablieren eines Mobilpaketdomänenlinks zu erhalten.

10. Endgerät gemäß Anspruch 8, wobei
das IP-Adressenerhaltungsmodul konfiguriert ist, um die erste IP-Adresse durch Etablieren eines WLAN-Links und abhängig von einer lokalen statischen IP-Einstellung oder DHCP zu erhalten; und die zweite IP-Adresse durch Etablieren eines Sicherheitstunnels unter Verwendung eines Links, wo die erste IP lokalisiert ist, zu erhalten;
die Leitwegetablierungseinheit ferner ein Sicherheitstunneletablierungsmodul beinhaltet, wobei die Leitwegkonfigurationsinformationen ferner Sicherheitstunnelinformationen entsprechend dem Sicherheitstunnel beinhalten und die Sicherheitstunnelinformationen Sicherheitsstrategieinformationen und eine IP-Adresse oder einen Domänennamen einer Tunnel-Port-Vorrichtung an der Netzseite beinhalten; das Anwendungssteuerungsmodul ferner konfiguriert ist, um bei Freigeben des Mobilpaketdomänendienstes, der den Sicherheitstunnel benötigt, Strategieelemente des Sicherheitstunnels gemäß den Sicherheitsstrategieinfomationen zu erzeugen, die Strategieelemente des Sicherheitstunnels und die IP-Adresse oder den Domänennamen der Tunnel-Port-Vorrichtung an der Netzseite an das Sicherheitstunneletablierungsmodul zu übermitteln, um das Sicherheitstunneletablierungsmodul zum Etablieren des Sicherheitstunnels zu veranlassen;
das Sicherheitstunneletablierungsmodul konfiguriert ist, um den Sicherheitstunnel unter Verwendung des Links, wo die erste IP-Adresse lokalisiert ist, gemäß dem Veranlassen des Anwendungssteuerungsmoduls zu etablieren und das IP-Adressenerhaltungsmodul zu benachrichtigen; und
das IP-Adressenerhaltungsmodul konfiguriert ist, um die zweite IP-Adresse unter Verwendung des etablierten Sicherheitstunnels zu erhalten.

11. Endgerät gemäß Anspruch 10, wobei
die Nachrichtenverarbeitungseinheit ein Übertragungskontrollprotokoll/Internetprotokoll-Modul (TCP/IP-Modul) beinhaltet, das konfiguriert ist, um die von dem Mobilinternetdienstmodul oder dem Mobilpaketdomänendienstmodul übermittelte ursprüngliche Dienstnachricht zu empfangen und die Dienstleitwegoptionen gemäß der Zieladresse der ursprünglichen Dienstnachricht abzugleichen und die ursprüngliche Dienstnachricht in eine Dienstdatennachricht einzukapseln; nach Empfangen und dann Entkapseln der von der Nachrichtenempfangs-/-übermittlungseinheit empfangenen Dienstdatennachricht die entkapselte Dienstdatennachricht an das entsprechende Mobilinternetdienstmodul oder das Mobilpaketdomänendienstmodul zu übermitteln.

12. Endgerät gemäß Anspruch 10, wobei
die Nachrichtenempfangs-/-übermittlungseinheit eine Drahtloslinkschnittstelle und eine funktionelle Schnittstelle einer Benutzerebene des Drahtlosprotokollstapels beinhaltet, wobei
die Drahtloslinkschnittstelle konfiguriert ist, um die Mobilinternetnetzdienstdatennachricht zu empfangen und zu übermitteln; und
die funktionelle Schnittstelle der Benutzerebene des Drahtlosprotokollstapels konfiguriert ist, um die Mobilpaketdomänendienstdatennachricht zu empfangen und zu übermitteln.

13. Endgerät gemäß Anspruch 10, wobei
die Nachrichtenverarbeitungseinheit ferner ein Datensicherheitsmodul beinhaltet, das mit dem TCP/IP-Modul verbunden ist,
das TCP/IP-Modul ferner konfiguriert ist, um die Quelladresse und die Zieladresse der eingekapselten ursprünglichen Dienstnachricht des Mobilpaketdomänendienstes zu einer zweiten IP-Adresse bzw. einer IP-Adresse des Mobilpaketdomänendienstservers zu machen und die eingekapselte Datennachricht an das Datensicherheitsmodul zu übermitteln, wenn bestimmt wird, dass ein Bedarf an einer Übermittlung durch den Sicherheitstunnel besteht;
das Datensicherheitsmodul konfiguriert ist, um noch einmal Tunneldateneinkapselung an der eingekapselten Nachricht durchzuführen und die Dienstdatennachricht, an der die Tunneleinkapselung durchgeführt wird und deren Zieladresse dann eine IP-Adresse der Tunnel-Port-Vorrichtung an der Netzseite ist, noch einmal an das TCP/IP-Modul zu übermitteln;
das TCP/IP-Modul ferner konfiguriert ist, um die Leitwegoptionen gemäß der Zieladresse der Dienstdatennachricht, an der die Tunneleinkapselung durchgeführt wird, abzugleichen und eine sekundäre Nachrichteneinkapselung durchzuführen, wobei die Quelladresse der Dienstdatennachricht nach der sekundären Einkapselung die erste IP-Adresse ist; und
die Nachrichtenempfangs-/-übermittlungseinheit ferner konfiguriert ist, um die Mobilpaketdomänendienstdatennachricht, an der die sekundäre Einkapselung durchgeführt wird, durch die Drahtloslinkschnittstelle und den etablierten Sicherheitstunnel zu übermitteln;
wobei die Dienstkonfigurationsinformationen vorzugsweise ferner ein verschlüsseltes Element des Dienstdatenstroms beinhalten,
das Anwendungssteuerungsmodul ferner konfiguriert ist, um das verschlüsselte Element des Dienstdatenstroms an das Datensicherheitsmodul zu liefern; und
das Datensicherheitsmodul ferner konfiguriert ist, um eine Verschlüssselung und Prüfung gemäß dem verschlüsselten Element durchzuführen.

## Revendications

1. Une méthode pour le contrôle d'accès d'un service réseau, laquelle est mise en oeuvre basée sur un terminal ayant la capacité d'accéder à un réseau local sans fil et la capacité d'accéder à un réseau mobile, **caractérisée en ce qu'**elle comprend :
une étape d'établissement de route (301), dans laquelle le terminal obtient une première adresse de protocole Internet, IP, allouée par un réseau local sans fil, WLAN, et une deuxième adresse IP allouée par un dispositif de domaine paquet de coeur de réseau mobile selon des informations de configuration de service, où les informations de configuration de service comprennent des informations de liaison associées à un service et des informations de configuration de route, où les informations de configuration de route comprennent un nom de domaine d'un serveur de services WLAN, ou comprennent une adresse IP et des informations de port d'un serveur de services de domaine paquet mobile, et établit des options de route de service Internet correspondant à la première adresse IP et des options de route de service de domaine paquet mobile correspondant à la deuxième adresse IP selon les informations de configuration de route ; ces options de route permettant à des messages IP avec une adresse de destination qui est une IP du serveur de services de domaine paquet mobile d'être transmis par le biais d'un port de dispositif correspondant à la deuxième adresse IP, et à des messages IP avec une adresse de destination qui n'est pas l'IP du serveur de services de domaine paquet mobile d'être transmis par le biais d'un port de dispositif du WLAN correspondant à la première adresse IP ;
une étape de concordance de route (302), dans laquelle le terminal fait concorder les options de route de service selon une adresse de destination d'un message de service original ; et
une étape d'encapsulation et de transmission de message (303), dans laquelle le terminal encapsule le message de service original selon les options de route de service concordantes et transmet le message de données de service encapsulé.

2. La méthode selon la revendication 1, dans laquelle,
dans l'étape d'établissement de route, le terminal obtient la première adresse IP en accédant au WLAN et en établissant une liaison WLAN, et obtient la deuxième adresse IP en accédant au réseau mobile et en établissant une liaison avec le domaine paquet dans l'étape d'encapsulation et de transmission de message, une adresse d'origine du message de données de service Internet encapsulé est la première adresse IP, et une adresse d'origine du message de données de service de domaine paquet mobile encapsulé est la deuxième adresse IP ; préférablement, dans l'étape d'encapsulation et de transmission de message, le terminal reçoit et transmet le message de données de service Internet par le biais d'une interface de liaison sans fil, et reçoit et transmet le message de données de service de domaine paquet mobile par le biais d'une interface fonctionnelle d'un plan utilisateur à pile de protocoles sans fil.

3. La méthode selon la revendication 1, dans laquelle,
dans l'étape d'établissement de route, le terminal obtient la première adresse IP en accédant au WLAN et en établissant une liaison WLAN, et établit un tunnel de sécurité en utilisant la liaison où la première adresse IP est située pour obtenir la deuxième adresse IP, et établit des options de route de tunnel correspondant à la première adresse IP tout en établissant des options de route de service de domaine paquet mobile correspondant à la deuxième adresse IP ;
l'étape d'encapsulation et de transmission de message comprend en sus : une adresse d'origine du message de données de service Internet encapsulé qui est la première adresse IP, une adresse d'origine interne du message de données de service de domaine paquet mobile sur lequel l'encapsulation secondaire est effectuée selon les options de route de service de domaine paquet mobile et les options de route de tunnel qui est la deuxième adresse IP, et une adresse d'origine externe qui est la première adresse IP ; préférablement, dans l'étape d'encapsulation et de transmission de message, le terminal reçoit et transmet le message de données de service Internet et le message de données de service de domaine paquet mobile par le biais de l'interface de liaison sans fil, et le message de données de service de domaine paquet mobile correspond à un port du côté terminal du tunnel de sécurité.

4. La méthode selon la revendication 1, dans laquelle, dans l'étape d'établissement de route, le terminal est déclenché pour obtenir la première adresse IP ou la deuxième adresse IP lorsque le service réseau est activé, ou le terminal obtient activement la première adresse IP ou la deuxième adresse IP avant que le service réseau soit activé.

5. La méthode selon la revendication 1, la revendication 2, ou la revendication 3, comprenant en sus : le terminal effectuant l'étape d'établissement de route selon des informations de configuration de service qui sont prédéfinies dans le terminal ou téléchargées dynamiquement sur le terminal, où les informations de configuration de service comprennent des informations de liaison associées au service et des informations de configuration de route ;
l'étape d'établissement de route comprend en sus :
lorsque le service est activé, le terminal déterminant s'il convient d'initier un processus de numérotation de liaison de domaine paquet mobile ou un processus d'établissement de liaison WLAN selon les informations de liaison associées au service, jusqu'à l'obtention de la première adresse IP ou de la deuxième adresse IP ; et le terminal établissant des options de route de service correspondantes selon les informations de configuration de route et la première adresse IP obtenue ou la deuxième adresse IP.

6. La méthode selon la revendication 5, dans laquelle,
les options de route de service Internet ou les options de route de service de domaine paquet mobile sont représentées par défaut ;
ou, les informations de configuration de service comprennent en sus des informations de stratégie de sécurité, et lorsque le service de domaine paquet mobile qui a besoin du tunnel de sécurité est activé, l'étape d'établissement de route comprend en sus : le terminal générant des points de stratégie du tunnel de sécurité selon les informations de stratégie de sécurité, établissant le tunnel de sécurité en utilisant la liaison où la première IP est située, et établissant des options de route de tunnel correspondant à la première adresse IP ; dans l'étape de concordance de route, le terminal fait concorder les options de route de tunnel et les options de route de service de domaine paquet mobile selon les informations de stratégie de sécurité ; l'étape d'encapsulation et de transmission de message comprend en sus : le terminal effectuant une encapsulation secondaire selon les options de route de service de domaine paquet mobile et les options de route de tunnel, où l'adresse d'origine interne du message de données de service de domaine paquet mobile sur lequel l'encapsulation secondaire est effectuée est la deuxième adresse IP, et l'adresse d'origine externe est la première adresse IP ; ou, les options de route de service Internet et les options de route de tunnel sont représentées par défaut, ou les options de route de service de domaine paquet mobile sont représentées par défaut.

7. Un terminal ayant la capacité d'accéder à un réseau local sans fil, WLAN, et la capacité d'accéder à un réseau mobile, **caractérisé en ce qu'**il comprend : une unité d'application, une unité de contrôle de route, une unité de traitement de message et une unité de réception/transmission de message, dans lequel
l'unité d'application est configurée pour gérer des informations de configuration de service d'un service de domaine paquet mobile et d'un service Internet, et générer et traiter un message de service original, où les informations de configuration de service comprennent des informations de liaison associées à un service et des informations de configuration de route, où les informations de configuration de route comprennent un nom de domaine d'un serveur de services WLAN, ou comprennent une adresse IP et des informations de port d'un serveur de services de domaine paquet mobile ;
l'unité d'établissement de route est connectée à l'unité d'application, et est configurée pour obtenir une première adresse de protocole Internet, IP, allouée par le WLAN et une deuxième adresse IP allouée par un dispositif de domaine paquet de coeur de réseau mobile selon les informations de configuration de service de l'unité d'application, et établir des options de route de service Internet correspondant à la première adresse IP et des options de route de service de domaine paquet mobile correspondant à la deuxième adresse IP selon les informations de configuration de route ; ces options de route permettant à des messages IP avec une adresse de destination qui est une IP du serveur de services de domaine paquet mobile d'être transmis par le biais d'un port de dispositif correspondant à la deuxième IP, et à des messages IP avec une adresse de destination qui n'est pas l'IP du serveur de services de domaine paquet mobile d'être transmis par le biais d'un port de dispositif du WLAN correspondant à la première adresse IP ;
l'unité de traitement de message est connectée à l'unité d'application et à l'unité d'établissement de route, et est configurée pour faire concorder les options de route de service qui sont établies par l'unité d'établissement de route selon une adresse de destination d'un message de service original, et encapsuler le message de service original en un message de données de service selon les options de route de service concordantes et dés-encapsuler le message de données de service qui est reçu par l'unité de réception/transmission de message en ce message de service original ; et l'unité de réception/transmission de message est connectée à l'unité de traitement de message, et est configurée pour recevoir le message de données de service avec une adresse de destination qui est la première adresse IP ou la deuxième adresse IP qui est transmis par le côté réseau, et transmettre le message de données de service avec l'adresse d'origine qui est la première adresse IP ou la deuxième adresse IP qui est encapsulé et traité par l'unité de traitement de message au côté réseau.

8. Le terminal selon la revendication 7, dans lequel
l'unité d'application comprend un ou plusieurs modules de service Internet mobile, un ou plusieurs modules de service de domaine paquet mobile et un module de contrôleur d'application, et l'unité d'établissement de route comprend un module d'obtention d'adresse IP et un module de contrôle de route, où
les modules de service Internet mobile sont configurés pour exploiter un service Internet mobile et générer et traiter le message de service original ;
les modules de service de domaine paquet mobile sont configurés pour exploiter le service de domaine paquet mobile, et générer et traiter le message de service original ; le module de contrôleur d'application est configuré pour gérer les services dans le module de service Internet mobile et le module de service de domaine paquet mobile, et enregistrer des informations de configuration de service correspondantes, transmettre les informations de configuration de service correspondantes à l'unité d'établissement de route lorsque le service est activé, où les informations de configuration de service comprennent des informations de liaison associées au service et des informations de configuration de route ;
le module d'obtention d'adresse IP est configuré pour déterminer s'il convient d'initier un processus de numérotation de liaison de domaine paquet mobile ou un processus d'établissement de liaison WLAN selon les informations de liaison associées au service, jusqu'à l'obtention de la première adresse IP ou de la deuxième adresse IP ; et le module de contrôle de route est configuré pour établir des options de route de service correspondantes selon les informations de configuration de route et la première adresse IP ou deuxième adresse IP qui est nouvellement obtenue par le module d'obtention d'adresse IP ou une première adresse IP ou deuxième adresse IP existante.

9. Le terminal selon la revendication 8, dans lequel le module d'obtention d'adresse IP est configuré pour obtenir la première adresse IP en établissant une liaison WLAN et en dépendant d'un paramètre IP statique local ou du protocole DHCP ; et obtenir la deuxième adresse IP en établissant une liaison de domaine paquet mobile.

10. Le terminal selon la revendication 8, dans lequel
le module d'obtention d'adresse IP est configuré pour obtenir la première adresse IP en établissant une liaison WLAN et en dépendant du paramètre IP statique local ou du protocole DHCP ; et obtenir la deuxième adresse IP en établissant un tunnel de sécurité en utilisant une liaison où la première IP est située ;
l'unité d'établissement de route comprend en sus un module d'établissement de tunnel de sécurité, où les informations de configuration de route comprennent en sus des informations de tunnel de sécurité correspondant au tunnel de sécurité, et les informations de tunnel de sécurité comprennent des informations de stratégie de sécurité et une adresse IP ou un nom de domaine d'un dispositif à port de tunnel du côté réseau ;
le module de contrôleur d'application est en sus configuré pour, lorsque le service de domaine paquet mobile qui a besoin du tunnel de sécurité est activé, générer des points de stratégie du tunnel de sécurité selon les informations de stratégie de sécurité, transmettre les points de stratégie du tunnel de sécurité et l'adresse IP ou nom de domaine du dispositif à port de tunnel du côté réseau au module d'établissement de tunnel de sécurité afin de déclencher le module d'établissement de tunnel de sécurité pour établir le tunnel de sécurité ;
le module d'établissement de tunnel de sécurité est configuré pour établir le tunnel de sécurité en utilisant la liaison où la première adresse IP est située selon le déclenchement du module de contrôleur d'application, et notifier le module d'obtention d'adresse IP ; et
le module d'obtention d'adresse IP est configuré pour obtenir la deuxième adresse IP en utilisant le tunnel de sécurité établi.

11. Le terminal selon la revendication 10, dans lequel
l'unité de traitement de message comprend un module de protocole TCP/IP (Transfer Control Protocol/Internet Protocol), lequel est configuré pour recevoir le message de service original transmis par le module de service Internet mobile ou le module de service de domaine paquet mobile, et faire concorder les options de route de service selon l'adresse de destination du message de service original et encapsuler le message de service original en un message de données de service ; après réception, puis dés-encapsulation du message de données de service reçu par l'unité de réception/transmission de message, transmettre le message de données de service dés-encapsulé au module de service Internet mobile correspondant ou au module de service de domaine paquet mobile.

12. Le terminal selon la revendication 10, dans lequel
l'unité de réception/transmission de message comprend une interface de liaison sans fil et une interface fonctionnelle d'un plan utilisateur à pile de protocoles sans fil, où l'interface de liaison sans fil est configurée pour recevoir et transmettre le message de données de service de réseau Internet mobile ; et
l'interface fonctionnelle du plan utilisateur à pile de protocoles sans fil est configurée pour recevoir et transmettre le message de données de service de domaine paquet mobile.

13. Le terminal selon la revendication 10, dans lequel
l'unité de traitement de message comprend en sus un module de sécurité de données connecté au module TCP/IP,
le module TCP/IP est en sus configuré pour faire que l'adresse d'origine et l'adresse de destination du message de service original encapsulé du service de domaine paquet mobile soit une deuxième adresse IP et une adresse IP du serveur de services de domaine paquet mobile respectivement, et transmettre le message de données encapsulé au module de sécurité de données lorsqu'il est déterminé qu'il est besoin de transmettre par le biais du tunnel de sécurité ;
le module de sécurité de données est configuré pour effectuer de nouveau une encapsulation de données tunnel sur le message encapsulé, et transmettre de nouveau le message de données de service, sur lequel l'encapsulation tunnel est effectuée et dont l'adresse de destination est alors une adresse IP du dispositif à port de tunnel du coté réseau, au module TCP/IP ;
le module TCP/IP est en sus configuré pour faire concorder les options de route selon l'adresse de destination du message de données de service sur lequel l'encapsulation tunnel est effectuée et effectuer une encapsulation de message secondaire où, après l'encapsulation secondaire, l'adresse d'origine du message de données de service est la première adresse IP ; et
l'unité de réception/transmission de message est en sus configurée pour transmettre le message de données de service de domaine paquet mobile sur lequel l'encapsulation secondaire est effectuée par le biais de l'interface de liaison sans fil et du tunnel de sécurité établi ;
préférablement, où les informations de configuration de service comprennent en sus un élément crypté de flux de données de service,
le module de contrôleur d'application est en sus configuré pour délivrer l'élément crypté des flux de données de service au module de sécurité de données ; et
le module de sécurité de données est en sus configuré pour effectuer un cryptage et une vérification selon l'élément crypté.
